# EUROPÄISCHE PATENTSCHRIFT

(11) **EP 3 406 126 B1**
(45) Veröffentlichungstag und Bekanntmachung des Hinweises auf die Patenterteilung: **26.02.2020**
(21) Anmeldenummer: 18401045.2
(22) Anmeldetag: 09.05.2018
(51) Int. Cl.: A01C 17/00

(54) **ZENTRIFUGALSTREUER MIT VERBESSERTER AUSBRINGREGELUNG**
CENTRIFUGAL DISTRIBUTOR WITH IMPROVED DISPENSING CONTROL
ÉPANDEUR CENTRIFUGE À RÉGLAGE D'ÉPANDAGE AMÉLIORÉ

(30) Priorität: 23.05.2017 DE 102017111184
(43) Veröffentlichungstag der Anmeldung: 28.11.2018
(73) Patentinhaber: Amazonen-Werke H. Dreyer GmbH & Co. KG, 49205 Hasbergen (DE)
(72) Erfinder: Große Brinkhaus, Andre, 48149 Münster (DE)

(56) Entgegenhaltungen:
- EP-A1- 0 963 690
- EP-A1- 2 409 560
- EP-A1- 3 165 072
- DE-A1-102011 110 607

## Beschreibung

Die Erfindung betrifft einen Zentrifugalstreuer zum Ausbringen von Streugut, insbesondere einen Zentrifugaldüngersteuer zum Ausbringen von Dünger.

Bei derartigen Zentrifugalstreuern wird das sich in einem Vorratsbehälter befindliche Streugut über einstellbare Dosierorgane den Wurfschaufeln der Schleuderscheiben in einstellbaren Mengen zugeleitet.

Zur Überwachung und Regelung der Ausbringmenge ist es beispielsweise durch die EP 1 008 288 B1 und die EP 0 963 690 A1 bekannt geworden, das Antriebsdrehmoment der Antriebselemente der Schleuderscheiben zu bestimmen. Hierbei wird typischerweise zunächst das Leerlaufdrehmoment bestimmt, also das Drehmoment, welches allein für den Antrieb der Scheibe aufgewendet wird. Die Differenz zwischen Leerlaufdrehmoment und Antriebsdrehmoment entspricht dem sogenannten Lastmoment, welches ein Maß für das durch das Ausbringen des Düngers aufgewendetes Drehmoment ist. Basierend auf dem festgestellten Drehmoment kann ein Istwert des auf die Schleuderscheibe auslaufenden Massenstroms ermittelt werden. Durch Vergleich mit einem Sollwert kann dann eine Regelung der Dosierorgane stattfinden. Weitere Zentrifugalstreuer sind offenbart in EP 3 165 072 A1 und EP 2 409 560 A1.

Es kann vorgesehen sein, bei einem Schleuderstreuer mit zwei Schleuderscheiben eine Messung des Drehmoments pro Schleuderscheibe durchzuführen. Alternativ kann vorgesehen sein, nur eine Messung durchzuführen und das ermittelte Ergebnis auf die zweite Schleuderscheibe zu übertragen. Hierbei können ggf. auch Abweichungen von Einstellparametern, insbesondere Drehzahl und Dosierschieberstellung zwischen den beiden Schleuderscheiben berücksichtigt werden.

Die Messung des Massenstroms über das Lastmoment ist jedoch fehleranfällig. So entstehen beispielsweise Fehler durch Drehzahlschwankungen oder Temperaturänderungen. Besonders in der Aufwärmphase des Antriebs sowie bei geringem Lastmoment ist daher die Bestimmung des Massenstroms unzuverlässig.

Der Erfindung liegt daher die Aufgabe zu Grunde, einen Zentrifugalstreuer sowie ein Verfahren zum Betreiben eines Zentrifugalstreuers bereitzustellen, welche eine präzisere Bestimmung der zur Regelung erforderlichen Größen ermöglichen. Diese Aufgabe wird durch einen Zentrifugalstreuer gemäß Patentanspruch 1 sowie durch ein Verfahren gemäß Patentanspruch 4 gelöst.

Weitere vorteilhafte Ausgestaltungen der Erfindung sind in den abhängigen Ansprüchen angegeben.

Gemäß der Erfindung ist es also vorgesehen, bei einem Lastmoment, das einen vorherbestimmten Schwellenwert nicht überschreiten bzw. innerhalb einer gewissen Zeit seit der Aktivierung des Antriebs, den auf die Schleuderscheibe auslaufenden Massenstrom nicht basierend auf dem Lastmoment zu bestimmen, sondern basierend auf Messwerten einer Wiegeeinrichtung. Dadurch kann eine genauere Abschätzung des Massenstroms auch bei geringem Lastmoment und während der Aufwärmphase des Antriebs erreicht werden.

Die vorbestimmte Zeitspanne entspricht einer Aufwärmphase des Antriebs. Die vorbestimmte Zeitspanne kann durch eine konkrete Zeitangabe vorgegeben werden. Beispielsweise kann die vorbestimmte Zeitspanne zwischen 5 Minuten und 30 Minuten, insbesondere 15 Minuten, betragen. Alternativ kann das Ablaufen der Zeitspanne dadurch bestimmt sein, dass eine vorherbestimmte Bedingung erfüllt wird, insbesondere, dass ein Betriebsparameter des Antriebs einen vorherbestimmten Schwellenwert überschreitet oder unterschreibt. Beispielsweise kann die vorbestimmte Zeitspanne enden, wenn die Temperatur des Antriebs einen vorherbestimmten Wert überschreitet oder wenn Schwankungen der Temperatur des Antriebs einen gewissen Wert unterschreiten. Für die Bestimmung der Temperatur des Antriebs bzw. dessen Schwankungen kann ein Temperatursensor vorgesehen sein. Es kann alternativ vorgesehen sein, dass die Zeitspanne durch eine auszubringende Menge an Streugut definiert wird. Beispielsweise kann bekannt sein, dass die Aufwärmphase nach dem Ausbringen einer Menge zwischen 500 kg und 200 kg abgeschlossen ist.

Der vorherbestimmte Schwellenwert für das Lastmoment kann zwischen 2 und 10 Nm, insbesondere bei 5 Nm, liegen.

Bei dem Zentrifugalstreuer kann es sich insbesondere um einen landwirtschaftlichen Düngerstreuer handeln. Bei dem Streugut handelt es sich in diesem Fall um einen, insbesondere granularen, Dünger.

Es ist wenigstens eine Schleuderscheibe für den Zentrifugalstreuer vorgesehen. Es können auch zwei oder mehr Schleuderscheiben Verwendung finden.

Die wenigstens eine Schleuderscheibe kann insbesondere unterhalb des Vorratsbehälters angeordnet sein. Die wenigstens eine Schleuderscheibe kann um eine aufrechte Achse mittels einer Antriebswelle rotierend antreibbar sein.

Auf der wenigstens einen Schleuderscheibe kann wenigstens eine Wurfschaufel angeordnet sein. Es können verschieden ausgebildete Wurfschaufel- oder Schleuderscheibensätze zur Anpassung an verschiedene Arbeitsbreiten- und Streubreitenbereiche zum Einsatz kommen. Insbesondere zum Bearbeiten der äußeren Fahrgasse, also zum Grenzstreuen, können an der Schleuderscheibe eine oder mehrere Grenzstreuschaufeln vorgesehen sein, deren Position, insbesondere deren Winkelanstellung, einstellbar ist. Dadurch kann sichergestellt werden, dass das Streubild zur Feldgrenze hin so angepasst werden kann, dass kein oder im wesentlichen kein Streugut über die Feldgrenze gelangt.

Bei dem Antrieb der Schleuderscheibe kann es sich um einen hydraulischen, mechanischen oder elektrischen Antrieb handeln. Der Antrieb kann die Schleuderscheibe über die oben genannte Lastwelle rotierend antreiben.

Die Wiegeeinrichtung kann einen oder mehrere Wiegesensoren umfassen. Über die Wiegeeinrichtung kann ein aktueller Wert der Streugutmenge im Vorratsbehälter in Form einer Masse des Streuguts im Vorratsbehälter bestimmt werden. Als Wiegesensoren können bekannte Sensoren Anwendung finden, etwa basierend auf Dehnungsmessstreifen oder Piezoelementen.

Zum Bestimmen des aktuellen Werts des über das Dosierorgan auf die Schleuderscheibe auslaufenden Massenstroms kann die Sensoreinrichtung als Drehmomentmesseinrichtung zur Messung des Lastdrehmoments der Schleuderscheibe ausgebildet sein. Das erforderliche Drehmoment zum Antrieb der Schleuderscheibe kann als Maß für die Ausbringmenge und damit für den Massenstrom angesehen werden. Wenn das Drehmoment beispielsweise abfällt, kann dies ein Hinweis darauf sein, dass die eingestellte Ausbringmenge nicht ausgebracht wird. Der auf die Schleuderscheibe auslaufende Massenstrom entspricht im Gleichgewichtszustand dem von der Schleuderscheibe ausgebrachten Massenstrom.

In der Steuereinheit kann ein entsprechendes Expertenprogramm hinterlegt sein, welches aus den Drehmomentwerten den entsprechenden Massenstrom ermittelt. Dafür können insbesondere eine oder mehrere Kennlinien hinterlegt sein, welche den Zusammenhang zwischen Drehmoment und Massenstrom repräsentieren.

Zur Bestimmung des Massenstroms können insbesondere auch das Leerlaufdrehmoment und/oder die Drehzahl der Schleuderscheibe berücksichtigt werden.

Die Steuereinheit kann so ausgebildet sein, dass sie einen Soll-Massenstrom (Sollwert) basierend auf der Fahrgeschwindigkeit des Zentrifugalstreuers bzw. des den Zentrifugalstreuer tragenden oder ziehenden Schleppers, der Sollstreumenge pro Fläche und der Arbeitsbreite errechnet. Die erforderlichen Größen können in die Steuereinheit eingebbar, über entsprechende Sensoren bestimmbar oder in einem Speicherelement hinterlegt sein. Insbesondere die Fahrgeschwindigkeit kann über einen entsprechenden Geschwindigkeitssensor bestimmbar sein.

Die Steuereinheit kann so ausgebildet sein, dass sie den Soll-Massenstrom aktualisiert, wenn sich einer der Parameter, insbesondere die Fahrgeschwindigkeit, ändert.

Bei der Steuereinheit kann es sich um eine elektronische Regel- und Auswerteeinheit, insbesondere um einen Bordrechner des Zentrifugalstreuers bzw. des den Zentrifugalstreuer tragenden oder ziehenden Schleppers, handeln. Diese kann insbesondere über entsprechende drahtlose oder drahtgebundene Verbindungen mit der Wiegeeinrichtung und der Sensoreinrichtung verbunden sein.

Das einstellbare Dosierorgan kann insbesondere einen Schieber umfassen, durch den eine Auslauföffnung des Vorratsbehälters in ihrer Öffnungsweite einstellbar und verschließbar ist. Der Schieber kann mittels eines zugeordneten motorischen Einstellmittels betätigtbar sein, wobei das Einstellmittel wiederum über die Steuereinheit betätigbar ist.

Bei der Einstellung des Dosierorgans kann es sich insbesondere um die Position des Schiebers, insbesondere in Bezug auf die Auslauföffnung, handeln. Die oben genannte Einstellung des Dosierorgans kann alternativ oder zusätzlich auch dem Aufgabepunkt des Streuguts auf der Schleuderscheibe entsprechen. Auch für die Einstellung des Aufgabepunktes kann ein entsprechendes Stellmittel vorgesehen sein, das über die Steuereinheit betätigbar ist.

Die Steuereinheit kann so ausgebildet sein, dass sie kontinuierlich oder in vorherbestimmten Zeitintervallen einen aktuellen Wert der Streugutmenge im Vorratsbehälter basierend auf Messwerten der Wiegeeinrichtung bestimmt. Die bestimmten Werte können dann in einem flüchtigen oder nicht flüchtigen Speicher abgelegt werden. Dadurch können die Werte für die Regelung des Zentrifugalstreuers bereitstehen. Insbesondere kann durch mehrere abgelegte Werte der Streugutmenge im Vorratsbehälter die Mengenänderung (Füllstandsänderung) errechnet werden, auf Basis derer der Massenstrom bestimmbar ist.

Zur Berechnung des Istwerts basierend auf Messwerten der Wiegeeinrichtung kann also beispielsweise basierend auf bestimmten Werten der Streugutmenge im Vorratsbehälter eine Änderung des Füllstandes bestimmt werden. Aus dieser Änderung des Füllstandes kann auf den Massenstrom geschlossen werden.

Wenn mehr als eine Schleuderscheibe vorgesehen ist, kann angenommen werden, dass sich der Massenstroms entsprechend dem Öffnungsverhältnis der Dosierorgane auf die Schleuderscheiben verteilt, wobei hierbei jeweils die durch die Öffnung bedingte Auslauffläche berücksichtigt wird.

Die Verfahrensschritte des erfindungsgemäßen Verfahrens nach Anspruch 4 können insbesondere durch eine oben beschriebene Steuereinheit durchgeführt werden. Die Steuereinheit kann dabei eines oder mehrere der oben genannten Merkmale aufweisen. Der Zentrifugalstreuer und die entsprechenden Elemente des Zentrifugalstreuers können ebenso eines oder mehrere der oben genannten Merkmale aufweisen. Gemäß dem Verfahren kann die Steuereinheit einen oder mehrere der Schritte durchführen, für deren Durchführung sie zuvor als ausgebildet beschrieben wurde.

Die Erfindung kann auch ein Computerprogrammprodukt bereitstellen, umfassend eines oder mehrere von einem Computer lesbaren Medien, mit von einem Computer ausführbaren Instruktionen zum Durchführen der Schritte eines oben genannten Verfahrens, wenn die Instruktionen auf einem Computer ausgeführt werden. Bei dem Computer, für den das Computerprogrammprodukt vorgesehen ist, kann es sich insbesondere um einen Bordrechner eines Zentrifugalstreuers bzw. eines den Zentrifugalstreuer tragenden oder ziehenden Schleppers handeln.

Weitere Merkmale und Vorteile der Erfindung werden nachfolgend anhand eines Ausführungsbeispiels erläutert.

Der beispielhafte Zentrifugalstreuer des Ausführungsbeispiels ist ein landwirtschaftlicher Schleuderdüngerstreuer. Dieser weist einen Vorratsbehälter für den auszubringenden Dünger auf. Der Vorratsbehälter weist in seinem unteren Bereich einen Auslauftrichter auf.

Der Auslauftrichter ist durch ein Dosierorgan abgeschlossen, über den der Dünger in einstellbaren Mengen der darunter angeordneten Schleuderscheibe zugeführt wird. Die Schleuderscheibe wird über eine Schleuderscheibenwelle und einen Hydraulikmotor angetrieben. Es versteht sich, dass der Antrieb über einen Hydraulikmotor nur als Beispiel dient und andere Antriebe, beispielsweise ein mechanischer oder elektrischer Antrieb ebenfalls möglich sind.

Auf der Schleuderscheibe sind Wurfschaufeln angeordnet, welche das ihnen zugeleitete Streugut in Breitenverteilung auf der Bodenoberfläche verteilen. Die Wurfschaufeln können in ihrer Position veränderbar sein. Die Wurfschaufeln können insbesondere in Scheibenebene mit unterschiedlichen Winkeln zur Radialen eingestellt werden. Durch die unterschiedliche Winkelanstellung der Wurfschaufeln kann für unterschiedliche Materialsorten und Arbeitsbreiten eine gleichmäßige Düngerverteilung erzielt werden.

Die Schleuderscheibe bzw. das Dosierorgan sind zueinander verstellbar, sodass die Lage des Aufgabepunktes des Düngers auf die Schleuderscheibe veränderbar ist.

Das Dosierorgan weist eine Bodenplatte auf, durch welche die untere Öffnung des Auslauftrichters abgeschlossen wird. In der Bodenplatte ist eine Auslauföffnung angeordnet, deren Öffnungsweite durch einen Schieber einstellbar ist. Der Schieber kann durch motorische Einstellmittel betätigt werden. Weitere motorische Einstellmittel können zur Einstellung des Aufgabepunktes vorgesehen sein.

Der Hydraulikmotor wird über eine geeignete Einrichtung, beispielsweise von der Hydraulikanlage des Schleppers oder einer Hydraulikpumpe, die von dem Schlepper oder mit anderen Mitteln motorisch angetrieben wird, angetrieben. Dem Hydraulikmotor ist eine Regeleinrichtung zugeordnet, mittels welcher die Drehzahl der Schleuderscheibe einstellbar ist.

In dem Antrieb der Schleuderscheibe ist ein Drehmomentsensor angeordnet. Außerdem ist der Schleuderscheibe bzw. deren Antriebswelle ein Drehzahlsensor zugeordnet, mittels welchem die Drehzahl messbar ist.

Schließlich ist noch eine Steuereinheit in Form einer elektronischen Regel- und Auswerteeinheit vorgesehen. Diese Steuereinheit ist über Leitungen mit den einzelnen Sensoren verbunden, sodass die von den Sensoren ermittelten Werte in die Steuereinheit übertragbar sind.

Über die Steuereinheit ist auch eine Einstellung der Dosierorgane möglich, insbesondere eine Einstellung der Position des Schiebers bzw. des Aufgabepunktes. Dafür ist die Steuereinheit entsprechend mit den Einstellmitteln verbunden. Auch die Drehzahl der Schleuderscheibe kann über die Steuereinheit eingestellt werden.

Die Steuereinheit ist so ausgebildet, dass sie aus Werten der Drehmomentsensoren ein Lastmoment bestimmen kann. Das erforderliche Lastmoment, um die Schleuderscheiben anzutreiben, um den Dünger in Breitenverteilung auf der Bodenoberfläche zu verteilen, ist ein Maß für die Ausbringmenge, also den Ist-Massenstrom. In der Steuereinheit ist ein entsprechendes Expertenprogramm hinterlegt, welches die Zusammenhänge zwischen den Drehmomentwerten und dem Massenstrom ermittelt. Dafür können insbesondere eine oder mehrere Kennlinien hinterlegt sein, welche die Zusammenhänge repräsentieren. Hierbei können unterschiedliche Kennlinien für unterschiedliche Einstellungen der Schleuderscheibe und/oder für unterschiedliche Schleuderscheiben verwendet werden.

Die Steuereinheit kann so also einen aktuellen Wert des über das Dosierorgan auf die Schleuderscheibe auslaufenden Massenstroms bestimmen.

Über eine Wiegeeinrichtung kann die Steuereinheit außerdem einen aktuellen Wert der Streugutmenge im Vorratsbehälter bestimmen. Über die Änderung der Streugutmenge kann ebenfalls der Ist-Massenstrom abgeleitet werden. Der Istwert des Massenstroms entspricht dabei der zeitlichen Massenänderung des Streuguts im Vorratsbehälter.

Die Steuereinheit ist so ausgebildet, dass sie bei geringem Lastmoment, beispielsweise unter 5 Nm, und/oder in der Aufwärmphase des Antriebs zur Bestimmung des Istwerts des Massenstroms auf Messwerte der Wiegeeinrichtung zurückgreift. Eine Regelung basierend auf dem gemessenen Lastmoment findet erst bei höheren Lastmomentwerten bzw. nach der Aufwärmphase des Antriebs statt. Dadurch kann die Regelung verbessert werden, da die Bestimmungen des Istwerts bei geringem Lastmoment bzw. in der Aufwärmphase des Antriebs unzuverlässig ist.

Die Steuereinheit kann so ausgebildet sein, dass sie eine Einstellung des Dosierorgans basierend auf einem Vergleich des Istwerts des Massenstroms mit dem Sollwert des Massenstroms regelt. Insbesondere kann derart die Position des Schiebers und/oder der Aufgabepunkt geregelt werden.

Wie bereits erwähnt, ist die Erfindung nicht auf hydraulisch angetriebene Schleuderscheiben begrenzt, sondern es sind auch andere Antriebe denkbar. Entsprechend dem gewählten Antrieb kann dann ein geeigneter Drehmomentsensor gewählt werden.

Der Zentrifugalstreuer kann als Anbaugerät für einen Schlepper ausgebildet sein. Es wäre aber auch möglich, den Zentrifugalstreuer als Nachläufer oder sogar selbstfahrend auszubilden.

Es versteht sich außerdem, dass die in dem zuvor beschriebenen Ausführungsbeispiel genannten Merkmale nicht auf diese speziellen Kombinationen beschränkt sind und auch in beliebigen anderen Kombinationen möglich sind, wie definiert in den Ansprüchen.

## Patentansprüche

1. Zentrifugalstreuer zum Ausbringen von Streugut, umfassend:
einen Vorratsbehälter für das auszubringende Streugut;
eine Wiegeeinrichtung zum Bestimmen aktueller Werte der Streugutmenge im Vorratsbehälter;
wenigstens eine Schleuderscheibe, der ein einstellbares Dosierorgan zugeordnet ist;
einen Antrieb der wenigstens einen Schleuderscheibe;
eine Sensoreinrichtung zum Bestimmen eines Lastmoments des Antriebs der Schleuderscheibe; und
eine Steuereinheit, die mit der Wiegeeinrichtung und der Sensoreinrichtung verbunden ist;
wobei die Steuereinheit derart ausgebildet ist, dass sie basierend auf einem Vergleich des Istwerts mit dem Sollwert des ausgebrachten Massenstroms das Dosierorgan regelt oder steuert;
wobei sie den Istwert basierend auf Messwerten der Wiegeeinrichtung bestimmt, wenn das von der Sensoreinrichtung gemessene Lastmoment geringer als ein vorherbestimmter Schwellenwert ist, oder seit Aktivierung des Antriebs eine Zeitspanne vergangen ist, die kürzer als eine vorbestimmte Zeitspanne ist;
wobei sie den Istwert basierend auf Messwerten der Sensoreinrichtung bestimmt, wenn das von der Sensoreinrichtung gemessene Lastmoment größer als der vorbestimmte Schwellenwert ist, oder seit Aktivierung des Antriebs eine Zeitspanne vergangen ist, die länger als die vorbestimmte Zeitspanne ist, und wobei die vorbestimmte Zeitspanne einer Aufwärmphase des Antriebs entspricht.

2. Zentrifugalstreuer nach Anspruch 1, wobei die vorbestimmte Zeitspanne durch eine ausgebrachte Streugutmenge, vorzugsweise zwischen 500 kg und 200 kg, definiert ist.

3. Zentrifugalstreuer nach einem der Ansprüche 1 bis 2, wobei der vorherbestimmte Schwellenwert zwischen 2 und 10 Nm liegt, insbesondere 5 Nm beträgt.

4. Verfahren zum Regeln oder Steuern der Ausbringmenge eines Zentrifugalstreuers, der einen Vorratsbehälter für das auszubringende Streugut, eine Wiegeeinrichtung zum Bestimmen aktueller Werte der Streugutmenge im Vorratsbehälter, wenigstens eine Schleuderscheibe, der ein einstellbares Dosierorgan zugeordnet ist, einen Antrieb der wenigstens einen Schleuderscheibe, eine Sensoreinrichtung zum Bestimmen eines Lastmoments des Antriebs der Schleuderscheibe, und eine Steuereinheit, die mit der Wiegeeinrichtung und der Sensoreinrichtung verbunden ist, umfasst, das Verfahren umfassend die von der Steuereinheit durchgeführten Schritte:
Bestimmen des Istwerts des ausgebrachten Massenstroms basierend auf Messwerten der Wiegeeinrichtung, wenn das von der Sensoreinrichtung gemessene Lastmoment geringer als ein vorherbestimmter Schwellenwert ist, oder seit Aktivierung des Antriebs eine Zeitspanne vergangen ist, die kürzer als eine vorbestimmte Zeitspanne ist;
Bestimmen des Istwerts des ausgebrachten Massenstroms basierend auf Messwerten der Sensoreinrichtung, wenn das von der Sensoreinrichtung gemessene Lastmoment größer als der vorbestimmte Schwellenwert ist, oder seit Aktivierung des Antriebs eine Zeitspanne vergangen ist, die länger als die vorbestimmte Zeitspanne ist; und Regeln oder Steuern des Dosierorgans basierend auf einem Vergleich des Istwerts mit dem Sollwert des ausgebrachten Massenstroms.

5. Verfahren nach Anspruch 4, wobei die vorbestimmte Zeitspanne einer Aufwärmphase des Antriebs entspricht.

6. Verfahren nach Anspruch 4, wobei die vorbestimmte Zeitspanne durch eine ausgebrachte Streugutmenge, vorzugsweise zwischen 500 kg und 200 kg, definiert wird.

7. Verfahren nach einem der Ansprüche 4 bis 6, wobei der vorherbestimmte Schwellenwert zwischen 2 und 10 Nm liegt, insbesondere 5 Nm beträgt.

## Claims

1. Centrifugal spreader for dispensing granular material, comprising:
a storage container for the granular material to be spread;
a weighing device for determining current values of the quantity of granular material in the storage container;
at least one centrifugal disc, which is assigned an adjustable metering element;
a drive of the at least one centrifugal disc;
a sensor device for determining a load torque of the drive of the centrifugal disc; and
a control unit, which is connected to the weighing device and the sensor device;
wherein the control unit is designed in such a way that the metering element is regulated or controlled on the basis of a comparison of the actual value with the target value of the mass flow applied,;
wherein it determines the actual value on the basis of measured values from the weighing device if the load torque measured by the sensor device is lower than a predetermined threshold value, or a time interval since activation of the drive which is shorter than a predetermined time interval has elapsed;
wherein it determines the actual value on the basis of measured values from the sensor device if the load torque measured by the sensor device is greater than the predetermined threshold value, or a time interval since activation of the drive which is longer than the predetermined time interval has elapsed, and
wherein the predetermined time interval corresponds to a warming phase of the drive.

2. Centrifugal spreader according to Claim 1, wherein the predetermined time interval is defined by a quantity of granular material applied, preferably between 500 kg and 200 kg.

3. Centrifugal spreader according to one of Claims 1 to 2, wherein the predetermined threshold value lies between 2 and 10 Nm, in particular is 5 Nm.

4. Method for regulating or controlling the dispensing quantity of a centrifugal spreader, which comprises a storage container for the granular material to be dispensed, a weighing device for determining current values of the quantity granular material in the storage container, at least one centrifugal disc, which is assigned an adjustable metering element, a drive of the at least one centrifugal disc, a sensor device for determining a load torque of the drive of the centrifugal disc, and a control unit, which is connected to the weighing device and the sensor device, the method comprising the steps carried out by the control unit:
determining the actual value of the applied mass flow on the basis of measured values from the weighing device if the load torque measured by the sensor device is lower than a previously determined threshold value, or a time interval since activation of the drive which is shorter than a predetermined time interval has elapsed;
determining the actual value of the applied mass flow on the basis of measured values from the sensor device if the load torque measured by the sensor device is greater than the predetermined threshold value, or a time interval since activation of the drive which is longer than a predetermined time interval has elapsed; and
regulating or controlling the metering element on the basis of a comparison of the actual value with the target value of the applied mass flow.

5. Method according to Claim 4, wherein the predetermined time interval corresponds to a warming phase of the drive.

6. Method according to Claim 4, wherein the predetermined time interval is defined by an applied quantity of granular material, preferably between 500 kg and 200 kg.

7. Method according to one of Claims 4 to 6, wherein the previously determined threshold value lies between 2 and 10 Nm, in particular is 5 Nm.

## Revendications

1. Épandeur centrifuge destiné à épandre du grain, ledit épandeur comprenant :
un récipient de stockage du grain à épandre ;
un dispositif de pesage destiné à déterminer des valeurs actuelles de la quantité de grain à épandre dans le récipient de stockage ;
au moins un disque centrifuge auquel est associé un élément doseur réglable ;
un entraînement de l'au moins un disque centrifuge ;
un dispositif capteur destiné à déterminer un couple de charge de l'entraînement du disque centrifuge ; et
une unité de commande reliée au dispositif de pesage et au dispositif capteur ;
l'unité de commande étant conçue de manière à réguler ou à commander l'élément doseur sur la base d'une comparaison de la valeur réelle avec la valeur de consigne du débit massique épandu ;
l'unité de commande déterminant la valeur réelle sur la base de valeurs de mesure du dispositif de pesage si le couple de charge mesuré par le dispositif capteur est inférieur à un seuil prédéterminé, ou si un intervalle de temps, plus court qu'un intervalle de temps prédéterminé, s'est écoulé depuis l'activation de l'entraînement ;
l'unité de commande déterminant la valeur réelle sur la base de valeurs de mesure du dispositif capteur si le couple de charge mesuré par le dispositif capteur est supérieur au seuil prédéterminé ou si un intervalle de temps, plus long qu'un intervalle de temps prédéterminé, s'est écoulé depuis l'activation de l'entraînement ; et
l'intervalle de temps prédéterminé correspondant à une phase d'échauffement de l'entraînement.

2. Épandeur centrifuge selon la revendication 1, l'intervalle de temps prédéterminé étant défini par une quantité de grain à épandre, de préférence entre 500 kg et 200 kg.

3. Épandeur centrifuge selon l'une des revendications 1 et 2, le seuil prédéterminé étant compris entre 2 et 10 Nm, notamment étant de 5 Nm.

4. Procédé de régulation ou de commande de la quantité d'épandage d'un épandeur centrifuge qui comprend un récipient de stockage du grain à épandre, un dispositif de pesage destiné à déterminer des valeurs actuelles de la quantité de grain à épandre dans le récipient de stockage, au moins un disque centrifuge auquel est associé un élément doseur réglable, un entraînement de l'au moins un disque centrifuge, un dispositif capteur destiné à déterminer un couple de charge de l'entraînement du disque centrifuge ; et une unité de commande reliée au dispositif de pesage et au dispositif capteur, le procédé comprenant les étapes suivantes effectuées par l'unité de commande :
déterminer la valeur réelle du débit massique épandu sur la base de valeurs de mesure du dispositif de pesage si le couple de charge mesuré par le dispositif capteur est inférieur à un seuil prédéterminé, ou si un intervalle de temps, plus court qu'un intervalle de temps prédéterminé, s'est écoulé depuis l'activation de l'entraînement ;
déterminer la valeur réelle du débit massique épandu sur la base de valeurs de mesure du dispositif capteur si le couple de charge mesuré par le dispositif capteur est supérieur au seuil prédéterminé ou si un intervalle de temps, plus long qu'un intervalle de temps prédéterminé, s'est écoulé depuis l'activation de l'entraînement ; et
réguler ou commander l'élément doseur sur la base d'une comparaison de la valeur réelle avec la valeur de consigne du débit massique épandu.

5. Procédé selon la revendication 4,
l'intervalle de temps prédéterminé correspondant à une phase d'échauffement de l'entraînement.

6. Procédé selon la revendication 4, l'intervalle de temps prédéterminé étant définie par une quantité de grain épandu, de préférence entre 500 kg et 200 kg.

7. Procédé selon l'une des revendications 4 à 6, le seuil prédéterminé étant compris entre 2 et 10 Nm, en particulier étant de 5 Nm.
